# NEW EUROPEAN PATENT SPECIFICATION

(11) **EP 0 836 984 B2**
(45) Date of publication and mention of the opposition decision: **11.06.2008**
(45) Mention of the grant of the patent: 25.07.2001
(21) Application number: 97202755.1
(22) Date of filing: 09.09.1997
(51) Int. Cl.: B62D 61/12, B60G 11/46

(54) **Axle-lifting device for a vehicle**
Achsanhebevorrichtung für ein Fahrzeug
Dispositif de relevage d'essieu pour un véhicule

(30) Priority: 09.09.1996 NL 1003983
(43) Date of publication of application: 22.04.1998
(73) Proprietor: WEWELER NEDERLAND B.V., 7332 AP Apeldoorn (NL)
(72) Inventor: Aalderink, Derk Geert, 7245 NV Laren (NL)
(74) Representative: van Westenbrugge, Andries

(56) References cited:
- EP-A- 0 431 673
- EP-A- 0 450 942
- DE-C- 3 807 273
- GB-A- 2 275 897

## Description

The invention relates to an axle-lifting device for a vehicle, comprising a support arm for the axle, which is pivotably fastened, on the one hand, to a pivoting suspension on a spring carrier arm and, on the other hand, to the axle, as well as a gas-spring system between the axle or the support arm and the chassis of the vehicle, a fixed support being fastened to the spring carrier arm below the support arm, on which support is arranged a gas bellows, the upper end of which presses against the support arm from below, in order to lift the axle by supplying pressurized gas to the gas bellows, while the gas-spring system is released, the upper end of the gas bellows being pivotably connected to the spring carrier arm by means of a spacer, the spring carrier arm on each of its opposite walls has a projection and the spacer has two ring parts which are situated on said opposite walls of the spring carrier arm, the spring carrier arm and the spacer being connected together by means of said projections and ring parts which can be pivoted with respect to one another, which projections and which ring parts are pushed into one another, and in that retaining means are provided for preventing the ring part and projection from sliding back with respect to one another.

An axle-lifting device of this kind is known from EP-A-431,673. In connection with retrofitting an axle-lifting device to a vehicle, such as a lorry, it is necessary partially to take apart the axle suspension structure. In such cases it is necessary, for example, to remove the pin which forms the pivot axis for the support arm, such that the spacer for the gas bellows can be suspended from the said pin. The support arm then has to be re-attached.

Such a procedure is complicated. Moreover, the support arm has to be re-installed with the necessary care in order to retain the safety and reliability of the wheel suspension.

The object of the invention is therefore to provide an axle-lifting device of the abovementioned type which does not have this disadvantage.

This object is achieved in that the spacer comprises two halves which are connected together by means of a bolt connection.

The spacer of the axle-lifting device according to the invention can be pushed onto the relevant projection or projections from the outside, without it being necessary to remove the pin from the support arm for this purpose. As a result, the existing wheel suspension structure is not affected, so that its integrity is guaranteed.

Retrofitting of the axle-lifting device is facilitated because the spacer comprises two halves which are connected together by means of a bolt connection. Both halves can be arranged directly at the desired location, after which they are fastened together in situ by means of the bolt connection.

The halves of the spacer may each comprise a connecting piece, which connecting pieces possess tongues which interlink in order to connect the halves together in a non-pivotable manner.

The projections may be designed in various ways. According to a particularly simple embodiment, each projection is formed by a reinforcement ring which is welded to the corresponding wall of the spring carrier arm, which reinforcement ring is present as standard for reinforcing the spring carrier arm at the location of the pin.

In an alternative embodiment, each projection is formed by a bush which is arranged on those parts of the pin forming the pivot axle which project beyond the walls of the spring carrier arm. These bushes may, for example, be pushed onto the nut or the bolt head.

The advantage of the latter two embodiments is that the support arm and the spacer execute identical pivoting movements about one and the same pivot point. As a result, there will be no sliding movements between the support arm and the spacer itself. The result is that the support arm, which has undergone a special surface treatment, will not be damaged.

In a further possible embodiment, the spacer consists of a resilient material and comprises two arms, at the end of each of which is situated a ring part, such that the arms with ring parts can be moved apart, counter to the spring force of the said material, in order to bring the ring parts to the level of the projections in the bent-apart state, and in order to allow the ring parts to spring back to their position in which they are pushed over the projections.

The invention will be explained in more detail below with reference to a number of exemplary embodiments depicted in the figures.
Figure 1 shows a first exemplary embodiment.
Figure 2 shows a second exemplary embodiment.

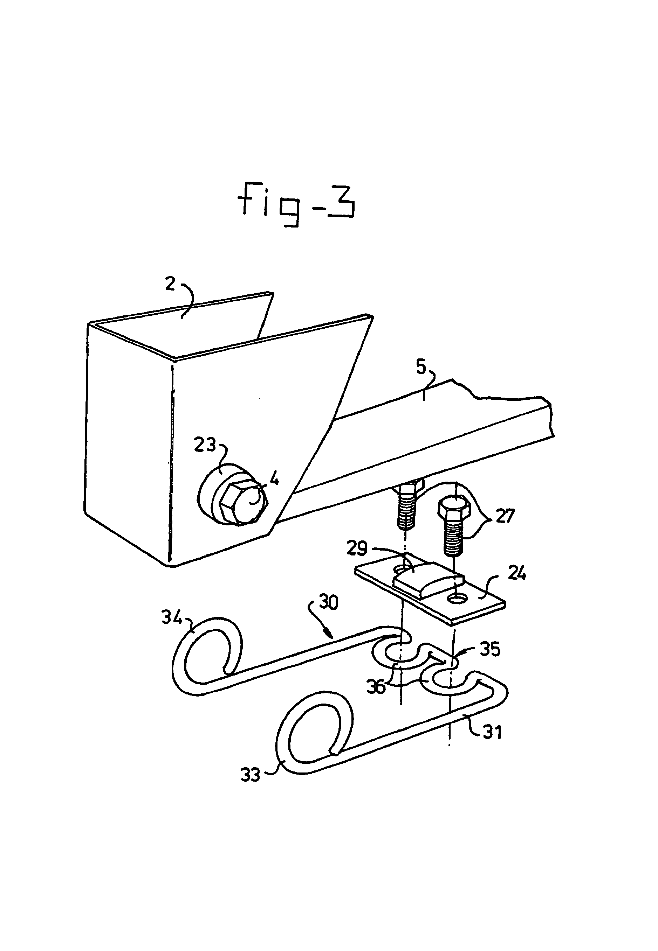

Figure 3 shows a third exemplary embodiment.

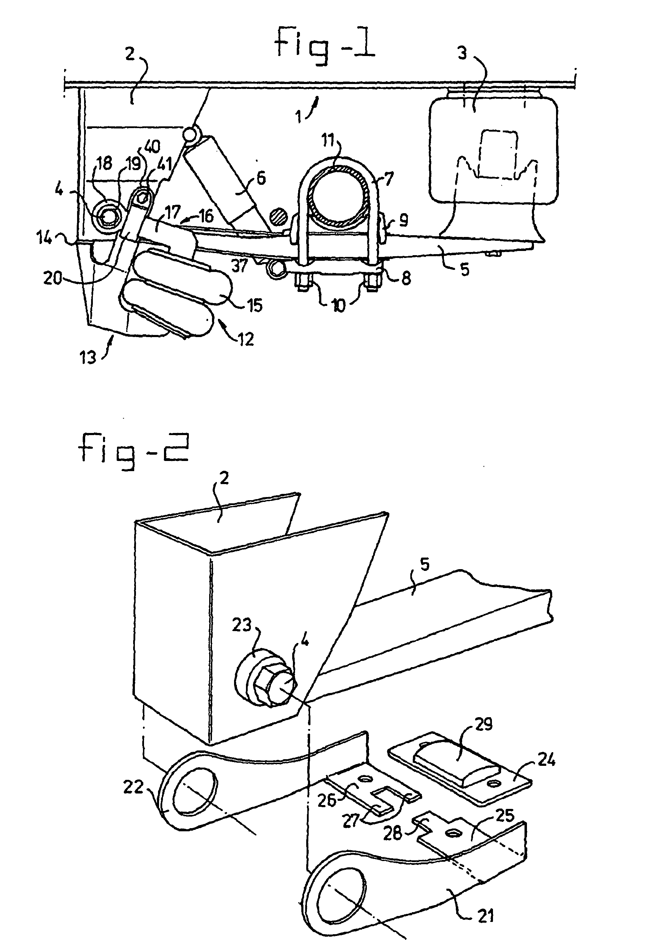

The axle-lifting device shown in Figure 1 is arranged on a vehicle, part of the chassis 1 of which is shown. Two spring carrier arms 2 (only one of which is visible) are welded to this chassis 1. Also fastened to the chassis 1 are two spring bellows 3 (of which again only one is visible). The support arm 5 is pivotably suspended from the pin 4. The other end of the support arm is supported resiliently by the spring bellows 3. Furthermore, the axle 11 is fastened to the support arm 5 by means of a structure which is known per se and comprises straps 7, axle guide 9, strap plate 8 and nuts 10. A shock absorber 6 also extends between the spring carrier arm 2 and the support arm 5.

The axle-lifting device 12 comprises a support 13, which is fastened to spring carrier arm 2 by means of weld 14 and lips 40/bolts 41. The gas bellows 15 is supported on the support 13. The top of the gas bellows 15 is fastened to spacer 16, which has two arms 17 (only one visible). A ring 18, which is slid pivotably over the reinforcement ring 19, is situated at the end of each arm.

## Claims

1. Axle-lifting device for a vehicle, comprising a support arm (5) for the axle (11), which is pivotably fastened, on the one hand, to a pivoting suspension on a spring carrier arm (2) and, on the other hand, to the axle (11), as well as a gas-spring system (3) between the axle (11) or the support arm (5) and the chassis of the vehicle, a fixed support (13) being fastened to the spring carrier arm (2) below the support arm (5), on which support (13) is arranged a gas bellows (15), the upper end of which presses against the support arm (5) from below, in order to lift the axle (11) by supplying pressurized gas to the gas bellows (15), while the gas-spring system (3) is released, the upper end of the gas bellows (15) being pivotably connected to the spring carrier arm (2) by means of a spacer (16), whereby the spring carrier arm (2) on each of its opposite walls has a projection (4, 23) and the spacer (16) has two ring parts (18) which are situated on said opposite walls of the spring carrier arm (2), the spring carrier arm (2) and the spacer (16) being connected together by means of said projections (4, 23) and ring parts (22) which can be pivoted with respect to one another, which projections (4, 23) and which ring parts (18) are pushed into one another, and in that retaining means (24, 28) are provided for preventing the ring part (18) and projection (4, 23) from sliding back with respect to one another, **characterized in that** the spacer (16) comprising two halves (21, 22) which are connected together by means of a bolt connection.

2. Axle-lifting device according to Claim 1, the halves (21, 22) of the spacer (16) each comprising a connecting piece (25, 26), which connecting pieces (25, 26) possess tongues (27, 28) which interlink in order to connect the halves (21, 22) together in a non-pivotable manner.

3. Axle-lifting device according to Claim 2, the connecting pieces (25, 26) lying in the same plane and being fastened together by means of a support plate (24), which overlaps the halves (21, 26) and rests against the support arm (5).

4. Axle-lifting device according to one of the preceding claims, each projection being formed by a reinforcement ring (4) which is welded to the corresponding wall of the spring carrier arm (2).

5. Axle-lifting device according to one of Claims 1 to 3, each projection being formed by a bush which is arranged on those parts of the pin forming the pivot axle which project beyond the walls of the spring carrier arm (2).

6. Axle-lifting device for a vehicle, comprising a support arm (5) for the axle (11), which is pivotably fastened, on the one hand, to a pivoting suspension on a spring carrier arm (2) and, on the other hand, to the axle (11), as well as a gas-spring system (3) between the axle (11) or the support arm (5) and the chassis of the vehicle, a fixed support (13) being fastened to the spring carrier arm (2) below the support arm (5), on which support (13) is arranged a gas bellows (15), the upper end of which presses against the support arm (5) from below, in order to lift the axle (11) by supplying pressurized gas to the gas bellows (15), while the gas-spring system (3) is released, the upper end of the gas bellows (15) being pivotably connected to the spring carrier arm (2) by means of a spacer (16), whereby the spring carrier arm (2) on each of its opposite walls has a projection (4, 23) and the spacer (16) has two ring parts (18) which are situated on said opposite walls of the spring carrier arm (2), the spring carrier arm (2) and the spacer (16) being connected together by means of said projections (4, 23) and ring parts (22) which can be pivoted with respect to one another, which projections (4, 23) and which ring parts (18) are pushed into one another, and in that retaining means (24, 28) are provided for preventing the ring part (18) and projection (4, 23) from sliding back with respect to one another, **characterized in that** the spacer consisting of a resilient material and comprising two arms, at the end of each of which is situated a ring part, such that the arms with ring parts can be moved apart, counter to the spring force of the said material, in order to bring the ring parts to the level of the projections in the bent-apart state, and in order to allow the ring parts to spring back to their position in which they are pushed over the projections.

7. Axle-lifting device according to Claim 6, the arms forming an integral unit with a connecting piece, to which connecting piece are fastened both the support for the support arm and the gas bellows.

## Patentansprüche

1. Achsenhebevorrichtung für ein Fahrzeug, wobei diese einen Stützarm (5) für die Achse (11) umfasst, der schwenkbar befestigt ist, und zwar auf der einen Seite an einer Zapfenaufhängung an einer Federhand (2), und auf der anderen Seite an der Achse (11), sowie ein Gas-Federsystem (3) zwischen der Achse (11) oder dem Stützarm (5) und dem Fahrgestell des Fahrzeugs, eine feste Auflage (13), die an der Federhand (2) unterhalb des Stützarms (5) befestigt ist, wobei auf der Auflage (13) ein Gas-Faltenbalg (15) angeordnet ist, dessen oberes Ende gegen den Stützarm (5) von unten drückt, um die Achse (11) durch Versorgen des Gas-Faltenbalgs (15) mit unter Druck gesetzter Luft anzuheben, während das Gas-Federsystem (3) freigesetzt ist, wobei das obere Ende des Gas-Faltenbalgs (15) schwenkbar mit der Federhand (2) durch einen Abstandshalter (16) verbunden ist, wobei die Federhand (2) auf jeder ihrer gegenüberliegenden Wände einen Vorsprung (4, 23) aufweist und der Abstandshalter (16) zwei Ringteile (18) aufweist, die auf den gegenüberliegenden Wänden der Federhand (2) sitzen, wobei die Federhand (2) und der Abstandshalter (16) miteinander durch die Vorsprünge (4, 23) und Ringteile (22) verbunden sind, die im Verhältnis zueinander schwenkbar sind, wobei die Vorsprünge (4, 23) und die Ringteile (18) ineinander geschoben werden, und dadurch, dass Rückhaltemittel (24, 28) bereitgestellt sind, die verhindern, dass das Ringteil (18) und der Vorsprung (4, 23) im Verhältnis zueinander zurückgleiten können, **dadurch gekennzeichnet, dass** der Abstandshalter (16) zwei Hälften (21, 22) umfasst, die miteinander durch eine Schraubenverbindung verbunden sind.

2. Achsenhebevorrichtung nach Anspruch 1, wobei die Hälften (21, 22) des Abstandhalters (16) jeweils ein Verbindungsstück (25, 26) umfassen, wobei die Verbindungsstücke (25, 26) Zungen (27, 28) besitzen, die verketten, um die Hälften (21, 22) in einer nicht-schwenkbaren Art und Weise zu verbinden.

3. Achsenhebevorrichtung nach Anspruch 2, wobei die Verbindungstücke (25, 26) in der gleichen Ebene liegen und aneinander durch eine Auflageplatte (24) befestigt sind, die die Hälften (21, 22) überdeckt und gegen den Stützarm (5) ruht.

4. Achsenhebevorrichtung nach einem der vorstehenden Ansprüche, wobei jeder Vorsprung durch einen Verstärkungsring (4) ausgebildet ist, der an die entsprechende Wand der Federhand (2) angeschweißt ist.

5. Achsenhebevorrichtung nach einem der Ansprüche 1 bis 3, wobei jeder Vorsprung durch eine Buchse ausgebildet ist, die an den Teilen des die Schwenkachse ausbildenden Zapfens angeordnet ist, die über die Wände der Federhand (2) hinaus vorstehen.

6. Achsenhebevorrichtung für ein Fahrzeug, wobei diese einen Stützarm (5) für die Achse (11) umfasst, der schwenkbar befestigt ist, und zwar auf der einen Seite an einer Zapfenaufhängung an einer Federhand (2), und auf der anderen Seite an der Achse (11), sowie ein Gas-Federsystem (3) zwischen der Achse (11) oder dem Stützarm (5) und dem Fahrgestell des Fahrzeugs, eine feste Auflage (13), die an der Federhand (2) unterhalb des Stützarms (5) befestigt ist, wobei auf der Auflage (13) ein Gas-Faltenbalg (15) angeordnet ist, dessen oberes Ende gegen den Stützarm (5) von unten drückt, um die Achse (11) durch Versorgen des Gas-Faltenbalgs (15) mit unter Druck gesetzter Luft anzuheben, während das Gas-Federsystem (3) freigesetzt ist, wobei das obere Ende des Gas-Faltenbalgs (15) schwenkbar mit der Federhand (2) durch einen Abstandshalter (16) verbunden ist, wobei die Federhand (2) auf jeder ihrer gegenüberliegenden Wände einen Vorsprung (4, 23) aufweist und der Abstandshalter (16) zwei Ringteile (18) aufweist, die auf den gegenüberliegenden Wänden der Federhand (2) sitzen, wobei die Federhand (2) und der Abstandshalter (16) miteinander durch die Vorsprünge (4, 23) und Ringteile (22) verbunden sind, die im Verhältnis zueinander schwenkbar sind, wobei die Vorsprünge (4, 23) und die Ringteile (18) ineinander geschoben werden, und dadurch, dass Rückhaltemittel (24, 28) bereitgestellt sind, die verhindern, dass das Ringteil (18) und der Vorsprung (4, 23) im Verhältnis zueinander zurückgleiten können, **dadurch gekennzeichnet, dass** der Abstandshalter aus einem elastischen Material besteht und zwei Arme umfasst, wobei auf deren jeweiligem Ende ein Ringteil sitzt, derart, dass die Arme mit den Ringteilen entgegen der Federkraft des Materials auseinander bewegt werden können, um die Ringteile auf das Niveau der Vorsprünge in dem auseinander gebogenen Zustand zu bringen, und, um den Ringteilen zu erlauben, in ihre Position zurückzuspringen, in welche diese über die Vorsprünge geschoben werden.

7. Achsenhebevorrichtung nach Anspruch 6, wobei die Arme eine integrale Einheit mit einem Verbindungsstück ausbilden, wobei an dem Verbindungsstück sowohl die Halterung für den Stützarm als auch der Gas-Faltenbalg befestigt sind.

## Revendications

1. Dispositif de relevage d'essieu pour véhicule, comprenant un bras de support (5) pour l'essieu (11), qui est relié en pivotement d'une part à une suspension pivotante sur un bras porteur à ressort (2) et d'autre part à l'essieu (11), ainsi qu'un système de ressort pneumatique (3) entre l'essieu (11) ou le bras de support (5) et le châssis du véhicule, un support fixe (13) étant fixé au bras porteur à ressort (2) au-dessous du bras de support (5), support fixe (13) sur lequel est monté un soufflet à gaz (15) dont l'extrémité supérieure s'appuie contre le bras de support (5) par le dessous, de manière à soulever l'essieu (11) en fournissant du gaz sous pression au soufflet à gaz (15), tandis que le système de ressort pneumatique (3) est libéré, l'extrémité supérieure du soufflet à gaz (15) étant reliée en pivotement au bras porteur (2) au moyen d'une pièce d'écartement (16),
le bras porteur à ressort (2) comportant une saillie (4, 23) sur chacune de ses parois opposées, et la pièce d'écartement (16) comportant deux parties annulaires (18) situées sur les parois opposées du bras porteur à ressort (2), ce bras porteur à ressort (2) et la pièce d'écartement (16) étant reliés l'un à l'autre au moyen des saillies (4, 23) et des parties annulaires (22) qu'on peut faire pivoter les unes par rapport aux autres, les saillies (4, 23) et les parties annulaires (18) étant poussées les unes dans les autres, et
des moyens de retenue (24, 28) étant prévus pour empêcher chaque partie annulaire (18) et chaque saillie (4, 23) de glisser en arrière l'une par rapport à l'autre
**caractérisé en ce que**
la pièce d'écartement (16) comprend deux moitiés (21, 22) reliées l'une à l'autre par une connexion à boulon.

2. Dispositif de relevage d'essieu selon la revendication 1,
dans lequel
les moitiés (21, 22) de la pièce d'écartement (16) comprennent chacune une pièce de connexion (25, 26), ces pièces de connexion (25, 26) possédant des pattes (27, 28) qui s'enclenchent pour connecter les moitiés (21, 22) l'une à l'autre d'une manière non pivotante.

3. Dispositif de relevage d'essieu selon la revendication 2,
dans lequel
les pièces de connexion (25, 26) se situent dans le même plan et sont fixées l'une à l'autre au moyen d'une plaque de support (24) qui recouvre les moitiés (21, 22) et s'appuie contre le bras de support (5).

4. Dispositif de relevage d'essieu selon l'une quelconque des revendications précédentes,
dans lequel
chaque saillie est formée par un anneau de renforcement (4) soudé à la paroi correspondante du bras porteur à ressort (2).

5. Dispositif de relevage d'essieu selon l'une quelconque des revendications 1 à 3,
dans lequel
chaque saillie est formée par un coussinet disposé sur les parties de la broche formant l'axe de pivot faisant saillie au-delà des parois du bras porteur à ressort (2).

6. Dispositif de relevage d'essieu pour véhicule, comprenant un bras de support (5) pour l'essieu (11), qui est relié en pivotement d'une part à une suspension pivotante sur un bras porteur à ressort (2) et d'autre part à l'essieu (11), ainsi qu'un système de ressort pneumatique (3) entre l'essieu (11) ou le bras de support (5) et le châssis du véhicule, un support fixe (13) étant fixé au bras porteur à ressort (2) au-dessous du bras de support (5), support fixe (13) sur lequel est monté un soufflet à gaz (15) dont l'extrémité supérieure s'appuie contre le bras de support (5) par le dessous, de manière à soulever l'essieu (11) en fournissant du gaz sous pression au soufflet à gaz (15), tandis que le système de ressort pneumatique (3) est libéré, l'extrémité supérieure du soufflet à gaz (15) étant reliée en pivotement au bras porteur (2) au moyen d'une pièce d'écartement (16),
le bras porteur à ressort (2) comportant une saillie (4, 23) sur chacune de ses parois opposées, et la pièce d'écartement (16) comportant deux parties annulaires (18) situées sur les parois opposées du bras porteur à ressort (2), ce bras porteur à ressort (2) et la pièce d'écartement (16) étant reliés l'un à l'autre au moyen des saillies (4, 23) et des parties annulaires (22) qu'on peut faire pivoter les unes par rapport aux autres, les saillies (4, 23) et les parties annulaires (18) étant poussées les unes dans les autres, et
des moyens de retenue (24, 28) étant prévus pour empêcher chaque partie annulaire (18) et chaque saillie (4, 23) de glisser en arrière l'une par rapport à l'autre
**caractérisé en ce que**
la pièce d'écartement consiste en un matériau élastique et comprend deux bras à l'extrémité de chacun desquels est située une partie annulaire, de façon que les bras munis des parties annulaires puissent être écartés l'un de l'autre, contre la force de ressort du matériau, de manière à amener les parties annulaires au niveau des saillies, dans l'état séparé par courbure, et de manière à permettre aux parties annulaires de revenir élastiquement dans leur position dans laquelle elles sont poussées sur les saillies.

7. Dispositif de relevage d'essieu selon la revendication 6,
dans lequel
les bras forment un bloc intégré avec une pièce de liaison à laquelle sont fixés à la fois le support du bras de support et le soufflet à gaz.
